Europäisches Patentamt

European Patent Office

Office européen des brevets

(11) Veröffentlichungsnummer: **0 446 738 B1**

## EUROPÄISCHE PATENTSCHRIFT

(45) Veröffentlichungstag der Patentschrift: **14.12.94**

(51) Int. Cl.5: **F16F 1/36**, F16F 1/37

(21) Anmeldenummer: **91103171.4**

(22) Anmeldetag: **02.03.91**

(54) **Bauteil zur Aufnahme von Stossenergien.**

(30) Priorität: **12.03.90 DE 9002988 U**

(43) Veröffentlichungstag der Anmeldung:
**18.09.91 Patentblatt 91/38**

(45) Bekanntmachung des Hinweises auf die
Patenterteilung:
**14.12.94 Patentblatt 94/50**

(84) Benannte Vertragsstaaten:
**DE ES FR GB IT NL SE**

(56) Entgegenhaltungen:
**DE-B- 1 238 278**
**DE-U- 8 630 181**
**FR-A- 2 441 683**
**GB-A- 1 449 675**
**GB-A- 2 088 524**

(73) Patentinhaber: **BASF Aktiengesellschaft**
**Carl-Bosch-Strasse 38**
**D-67063 Ludwigshafen (DE)**

(72) Erfinder: **Lenz, Werner**
**Freyastrasse 9**
**W-6700 Ludwigshafen (DE)**
Erfinder: **Domas, Friedrich**
**Hasenweg 4**
**W-6822 Altlussheim (DE)**
Erfinder: **Haardt, Udo**
**Darmstaedter Strasse 132**
**W-6843 Biblis (DE)**

## Beschreibung

Die Erfindung betrifft ein Bauteil zur Aufnahme von Stoßenergien, bestehend aus einem langgestreckten Körper rechteckigen Querschnitts mit den Rechteckseiten a und b und mit einer in der gesamten Längsausdehnung und an einer Seite des Körpers sich erstreckenden Ausnehmung. Ein derartiges Bauteil ist aus der GB-A-2 088 524 bekannt.

Die Wirksamkeit eines Stoßenergie absorbierenden Bauteils wird durch einen Gütefaktor $\eta$ charakterisiert, der bei den bisher gebräuchlichen Polymerschaum-Bauteilen zwischen 0,5 und 0,7 liegt. Er wird nach Gleichung

$$\eta = \frac{E_1}{E_2}$$

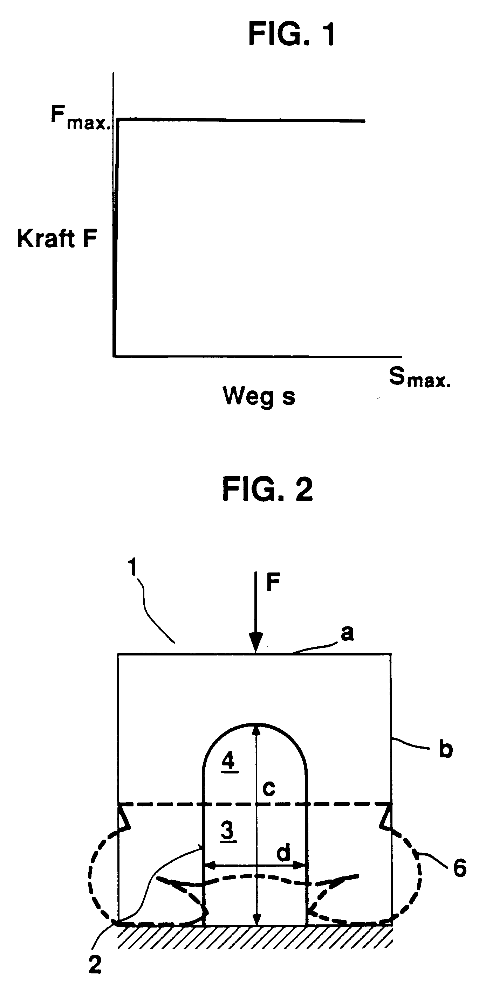

berechnet, wobei
$E_1$ die tatsächlich absorbierte Energie und $E_2$ die Energie ist, die ein idealer Energieabsorber mit dem Gütefaktor $\eta = 1$ aufnehmen könnte. Ein solches Bauteil hätte, wie das Diagramm in Figur 1 zeigt, einen quasi rechteckigen Verlauf der Kraft-Weg-Kennlinie, so daß bei maximaler Stoßkraft $F_{max}$ nur ein sehr geringer Verformungsweg s auftreten würde.

Es war daher die Aufgabe zu lösen, ein einfaches Bauteil zur Aufnahme von Stoßenergien zu entwickeln, dessen Kraft-Weg-Kennlinie dem rechteckigen Verlauf weitgehend angenähert ist.

Die Aufgabe wurde durch ein Bauteil der eingangs geschilderten Art gelöst, das zusätzlich die kennzeichnenden Merkmale des einzigen Anspruchs aufweist.

Die Erfindung ist anhand eines in der Zeichnung schematisch dargestellten Ausführungsbeispiels nachfolgend näher beschrieben.
Es zeigen
Figur 1    ein Kraft-Weg-Diagramm eines idealen Energieabsorberbauteils
Figur 2    ein Bauteil mit den erfindungsgemäßen Merkmalen im Querschnitt
Figur 3    ein Kraft-Weg-Diagramm eines in Figur 2 dargestellten Bauteils
Das Bauteil besteht aus einem gestreckten Polymerschaumkörper 1 rechteckigen Querschnitts mit den Rechteckseiten a und b und mit einer in der gesamten Längsausdehnung sich erstreckenden Ausnehmung 2 (Figur 2). Die aufzunehmende Stoßkraft F wirkt auf die Seite a, an deren gegenüberliegenden Seite sich die Ausnehmung 2 befindet. Sie weist einen zur Seite b parallelen, in der Seitenmitte angeordneten Ausschnitt 3 mit der Breite d auf, an den sich ein Rundbogenteil 4 anschließt. Die Gesamthöhe der Ausnehmung ist c. Genügen die vorstehenden Dimensionen den Gleichungen

a = 0,90 ... 1,10 • b
c = 0,65 ... 0,80 • b
d = 0,45 ... 0,55 • a,

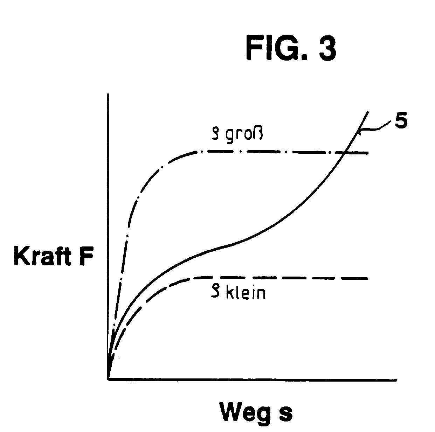

werden die in Figur 3 dargestellten Kraft-Weg-Kennlinien mit nahezu rechteckigem Verlauf erhalten, wobei der Kurvenparameter die Dichte $\rho$ des Bauteilmaterials ist. Im Vergleich dazu ist eine Kennlinie 5 herkömmlicher Polymerschaum-Bauteile gezeigt.

Die in Figur 2 zu sehende unterbrochene Kontur 6 stellt die Verformung des Schaumkörpers 1 bei maximaler Stoßkraft $F_{max}$ dar. Bei Nachlassen der Stoßkraft stellt sich der Körper nahezu elastisch zurück.

Geeignete Schaummaterialien sind harte bzw. halbharte Schaumsysteme, wie expandiertes Polypropylen, Polyurethan, Polyvinylchlorid.

Versuche mit Bauteilen nach der Erfindung aus solchen Materialien haben gezeigt, daß der Gütefaktor $\eta$ gegenüber den herkömmlichen Bauteilen wesentlich gesteigert ist.

## Patentansprüche

1.    Bauteil zur Aufnahme von Stoßenergien, bestehend aus einem langgestreckten Körper (1) rechteckigen Querschnitts mit den Rechteckseiten a und b und mit einer in der gesamten Längsausdehnung und an einer Seite des Körpers sich erstreckenden Ausnehmung (2), dadurch gekennzeichnet, daß der Körper (1) aus Polymerschaum besteht und daß die Ausnehmung mit einer Höhe c einen bezogen auf die Erstreckung der Rechteckseite a mittig angeordneten Ausschnitt (3) mit zur Rechteckseite b parallelen, im Abstand d zueinander angeordneten Innenwandungen und einen abschließenden Rundbogenteil (4) aufweist und die genannten Dimensionen folgenden Gleichungen genügen:

a = 0,90 ... 1,10 • b
c = 0,65 ... 0,80 • b
d = 0,45 ... 0,55 • a.

## Claims

1.    A component for absorbing impact energy, comprising an elongated block (1) of a rectangular cross-section having sides a and b and having a recess (2) which extends along the entire length of the block on one side, wherein the block (1) comprises polymer foam and the recess, having a depth c, has, relative to the extension of side a, a central cutout (3) with inner walls which are parallel to side b and arranged at a distance d from one another, and a terminal, circular arc part (4), and said dimensions satisfy the following equations:

$$a = 0.90 \ldots 1.10 \cdot b$$
$$c = 0.65 \ldots 0.80 \cdot b$$
$$d = 0.45 \ldots 0.55 \cdot a$$

## Revendications

1. Elément de construction pour l'absorption d'énergie de choc, se composant d'un corps de forme très allongée (1) qui a une section rectangulaire avec des côtés a et b et qui présente un creux (2) s'étendant sur toute l'étendue longitudinale et d'un côté du corps, caractérisé en ce que le corps (1) est en mousse de polymère et en ce que le creux, d'une hauteur c, est formé par une entaille (3) qui est disposée au milieu par rapport à l'étendue du côté a du rectangle et qui présente des parois internes disposées parallèlement au côté b du rectangle à une distance mutuelle d, ainsi que par une partie en plein cintre (4) qui le ferme, et en ce que lesdites dimensions satisfont aux équations suivantes:

$$a = 0,90 \ldots 1,10 \cdot b$$
$$c = 0,65 \ldots 0,80 \cdot b$$
$$d = 0,45 \ldots 0,55 \cdot a.$$

# FIG. 1

# FIG. 2

# FIG. 3